# DEMANDE DE BREVET EUROPEEN

(11) **EP 2 887 574 A1**
(43) Date de publication de la demande: **24.06.2015**
(21) Numéro de dépôt: 13197754.8
(22) Date de dépôt: 17.12.2013
(51) Int. Cl.: H04L 9/06

(54) **Procédé de conversion d'un contenu à acces conditionnel**

(71) Demandeur: Nagravision S.A., 1033 Cheseaux-sur-Lausanne (CH)
(72) Inventeur: Schwarz, Christian, 1418 Vuarrens (CH); Wyseur, Brecht, 1305 Penthalaz (CH)
(74) Mandataire: Leman Consulting S.A.

(57) **Abrégé**

La présente invention concerne un procédé de conversion d'un contenu à accès conditionnel ayant été chiffré de façon à pouvoir être déchiffré par un premier récepteur, en utilisant un premier mode de chiffrement, en un contenu chiffré de façon à pouvoir être déchiffré par un deuxième récepteur utilisant un deuxième mode de chiffrement, dans lequel le contenu n'apparaît pas en clair pendant la conversion. Ce procédé comporte les étapes de réception par un module cryptographique dudit premier récepteur, dudit contenu chiffré selon le premier mode de chiffrement; de détermination dudit deuxième mode de chiffrement utilisé par le deuxième récepteur; de détermination d'une opération de combinaison commutative utilisée dans chacun des premier et deuxième modes de chiffrement; de détermination d'une première donnée d'entrée de ladite opération de combinaison du premier mode de chiffrement, cette première donnée d'entrée étant requise pour déchiffrer le contenu à partir du contenu chiffré et en utilisant le premier mode de chiffrement; de détermination d'une deuxième donnée d'entrée de ladite opération de combinaison du deuxième mode de chiffrement, cette deuxième donnée d'entrée étant requise pour chiffrer le contenu à partir du contenu en clair et en utilisant le deuxième mode de chiffrement; et d'interversion desdites première et deuxième données d'entrée de manière à traiter le contenu reçu par le module cryptographique du premier récepteur, ce traitement comprenant une opération de déchiffrement selon le premier mode de chiffrement, en utilisant ladite donnée d'entrée correspondant au deuxième mode de chiffrement, et à traiter le contenu obtenu lors de l'étape de traitement précédente, ce traitement comprenant une opération de chiffrement selon le deuxième mode de chiffrement, en utilisant ladite donnée d'entrée correspondant au premier mode de chiffrement.

## Description

### DOMAINE TECHNIQUE

La présente invention concerne un procédé de conversion d'un contenu à accès conditionnel ayant été chiffré de façon à pouvoir être déchiffré par un premier récepteur, en utilisant un premier mode de chiffrement comportant une opération de combinaison commutative utilisant au moins deux données d'entrée, en un contenu chiffré de façon à pouvoir être déchiffré par un deuxième récepteur utilisant un deuxième mode de chiffrement comportant une opération de combinaison commutative utilisant au moins deux données d'entrée.

De façon plus détaillée, la présente invention s'applique dans un réseau de récepteurs dans lequel les récepteurs communiquent entre eux en utilisant des formats ou des protocoles qui peuvent être différents en fonction des récepteurs impliqués dans la communication. Ces formats ou protocoles peuvent également être différents entre la communication établie entre un centre de gestion et une passerelle de réseau servant de porte d'entrée à ce réseau d'une part et entre les communications établies entre la passerelle du réseau et les autres membres de ce réseau d'autre part. Le terme de "membre" est entendu ici comme un dispositif physique recevant un contenu à accès conditionnel, typiquement un récepteur équipé d'un module cryptographique. Dans ce contexte, la passerelle du réseau pourra également être un récepteur comportant des moyens cryptographiques tels qu'en particulier un module cryptographique.

### TECHNIQUE ANTERIEURE

Dans le cadre de réseaux prévus pour la distribution de contenu à accès conditionnel tels qu'en particulier les réseaux domestiques, les récepteurs formant ces réseaux utilisent fréquemment des formats de données différents les uns des autres, de même que des algorithmes ou des modes de chiffrement différents. Il en résulte que lorsqu'un contenu est reçu par un premier récepteur d'un réseau domestique tel qu'en particulier une passerelle de réseau, ce premier récepteur doit souvent convertir le contenu à accès conditionnel qu'il a reçu en un contenu qu'un ou plusieurs autres récepteurs seront capables de lire.

En particulier, un contenu à accès conditionnel est généralement envoyé selon un premier format, chiffré avec une première clé, à un premier récepteur ou à une passerelle de réseau, cet envoi ayant été préparé dans un centre de gestion. Lorsque ce contenu est reçu par le premier récepteur, celui-ci peut l'utiliser si le contenu lui est destiné ou il peut être amené à le traiter de façon à le rendre utilisable pour un autre récepteur du réseau si le contenu est destiné à cet autre récepteur.

Pour ceci, la manière conventionnelle de traiter le contenu reçu consiste à déchiffrer ce contenu selon les paramètres spécifiques au premier récepteur (clé, algorithme cryptographique, ...) de façon à obtenir le contenu en clair dans ce premier récepteur. Celui-ci convertit ensuite ce contenu en clair en un contenu chiffré que le deuxième récepteur sera en mesure de déchiffrer. Le contenu entrant aussi bien que le contenu sortant du premier récepteur sont donc chiffrés. Selon cette procédure, le contenu est disponible en clair dans le premier récepteur à un moment donné de la conversion. Une personne mal intentionnée ayant accès au récepteur peut donc en principe copier le contenu en clair et éventuellement le distribuer à des utilisateurs non autorisés.

Dans la majorité des appareils existants, le hardware dans lequel le contenu est présent en clair est sécurisé de telle façon que ce contenu soit difficilement accessible. Un problème se pose toutefois du fait que les récepteurs sont placés chez les utilisateurs et que l'environnement n'est par conséquent pas totalement sécurisé. Un utilisateur particulièrement compétent pourrait donc être en mesure d'accéder au contenu en clair malgré les sécurités mises en place dans le récepteur.

Pour cette raison, il est souhaitable de pouvoir convertir un contenu à accès conditionnel d'un format en un autre sans que ce contenu ne soit disponible en clair pendant la conversion.

### EXPOSE DE L'INVENTION

La présente invention se propose de pallier les inconvénients des procédés et des dispositifs mentionnés ci-dessus en réalisant un procédé dans lequel un contenu à accès conditionnel est convertit d'un format en un autre, sans que ce contenu n'apparaisse en clair durant la conversion.

Le but de l'invention est atteint par un procédé de conversion d'un contenu tel que défini en préambule et caractérisé en ce qu'il comporte les étapes suivantes :
- réception par un module cryptographique dudit premier récepteur, dudit contenu chiffré selon le premier mode de chiffrement;
- choix d'une première donnée d'entrée de ladite opération de combinaison du premier mode de chiffrement, cette première donnée d'entrée étant requise pour déchiffrer le contenu à partir du contenu chiffré et en utilisant le premier mode de chiffrement;
- choix d'une deuxième donnée d'entrée de ladite opération de combinaison du deuxième mode de chiffrement, cette deuxième donnée d'entrée étant requise pour chiffrer le contenu à partir du contenu en clair et en utilisant le deuxième mode de chiffrement;
- interversion desdites première et deuxième données d'entrée de manière à:
   - traiter le contenu reçu par le module cryptographique du premier récepteur, ce traitement comprenant une opération de déchiffrement selon le premier mode de chiffrement, en utilisant ladite donnée d'entrée correspondant au deuxième mode de chiffrement, et à
   - traiter le contenu obtenu lors de l'étape de traitement précédente, ce traitement comprenant une opération de chiffrement selon le deuxième mode de chiffrement, en utilisant ladite donnée d'entrée correspondant au premier mode de chiffrement.

Le procédé de l'invention utilise au moins deux modes de chiffrement/déchiffrement différents. L'un de ces modes correspond à celui utilisé par un premier récepteur et un autre mode correspond à celui utilisé par un deuxième récepteur pour accéder au contenu en clair.

Chacun de ces modes de chiffrement utilise un ensemble de paramètres cryptographiques spécifiques tels qu'en particulier une clé et un algorithme cryptographique.

Selon l'invention, un contenu à accès conditionnel est convertit selon les spécifications déterminées d'une part pour l'envoi de contenu au premier récepteur et d'autre part, pour l'envoi du contenu du premier récepteur au deuxième récepteur. Les spécifications sont notamment le mode de chiffrement du contenu, mais également les clés et les algorithmes utilisés,... Le mode de chiffrement peut être choisi parmi un grand nombre de modes de chiffrement disponibles, pour autant que leur fonctionnement soit symétrique. Parmi les modes connus, on peut citer le mode CBC (Cypher block chaining), PCBC (Propagating Cypher Block Chaining), CTR (CounTeR), ECB (Electronic Code Book), CFB (Cipher Feedback), OFB (Output Feedback) et CTS (CipherText Stealing) notamment.

Une contrainte s'applique aux modes de chiffrement, cette contrainte devant être respectée pour que le procédé de l'invention fonctionne. Il faut en effet que les modes de chiffrement soient symétriques et qu'ils comportent au moins une opération commutative. Une telle opération commutative peut être une fonction OU exclusif (XOR), un chiffrement symétrique, une addition ou une multiplication par exemple.

Supposons qu'un contenu à accès conditionnel ait été chiffré dans un centre de gestion ou dans un module de chiffrement d'un récepteur. Ce contenu a été chiffré de façon à pouvoir être déchiffré dans un premier récepteur en utilisant un premier mode de chiffrement. Supposons que ce contenu doive être converti pour pouvoir être déchiffré par un deuxième récepteur utilisant un deuxième mode de chiffrement. Dans le procédé de l'invention, pour autant que les contraintes mentionnées ci-dessus soient respectées, il est possible d'inverser des éléments spécifiques au premier mode de chiffrement avec des éléments spécifiques au deuxième mode de chiffrement, sans affecter le résultat final, ce résultat final correspondant au résultat obtenu par un déchiffrement selon le premier mode de chiffrement, suivi du rechiffrement selon le deuxième mode de chiffrement. Ce résultat final pourra être utilisé dans un deuxième récepteur pour obtenir le contenu en clair. Par contre, le résultat intermédiaire, c'est-à-dire le résultat obtenu après une première étape de déchiffrement, ne donnera pas le résultat en clair. La conversion, c'est-à-dire le premier déchiffrement suivi d'un rechiffrement, est effectuée dans le premier récepteur alors que le récepteur effectuant le deuxième déchiffrement est le récepteur final qui, si les droits sont présents, sera autorisé à accéder de façon légale au contenu. Il résulte de ceci que le contenu ne sera jamais disponible en clair dans le premier récepteur.

### DESCRIPTION SOMMAIRE DES DESSINS

La présente invention et ses avantages seront mieux compris en référence aux figures annexées et à la description détaillée d'un mode de réalisation particulier, dans lequel :
- les figures 1 à 4 sont des schémas explicatifs illustrant le chiffrement et le déchiffrement selon deux modes de chiffrement/déchiffrement connus de l'art antérieur;
- la figure 5 illustre un procédé de conversion de contenu à accès conditionnel connu de l'art antérieur; et
- la figure 6 illustre de façon schématique un des modes de réalisation possibles du procédé de conversion d'un contenu selon la présente invention.

### MANIERES DE REALISER L'INVENTION

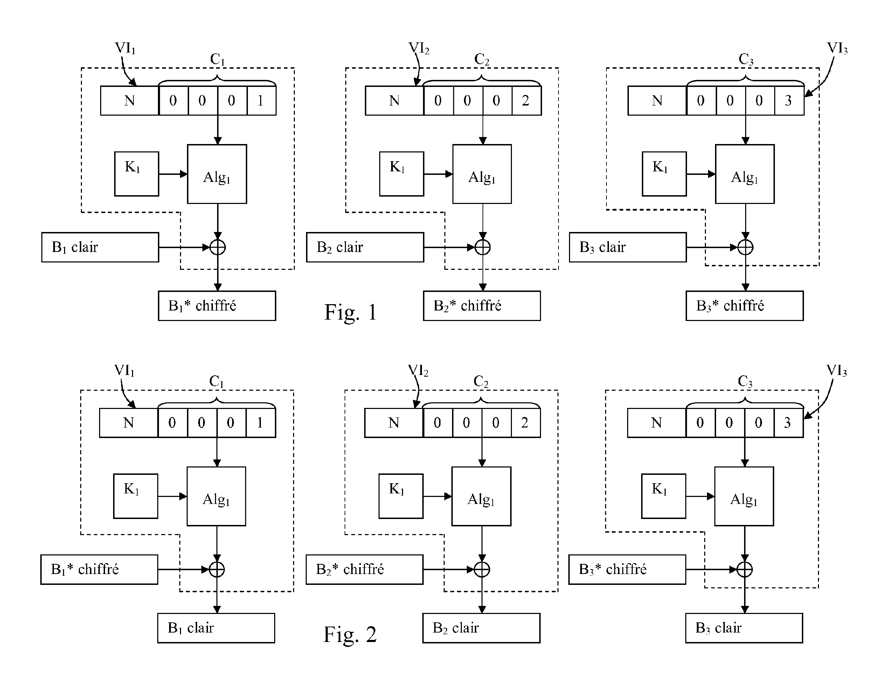

Les figures 1 à 4 décrivent des modes de chiffrement/ déchiffrement bien connus de l'art antérieur. Ces modes de chiffrement/déchiffrement sont des exemples de modes utilisables dans le procédé de l'invention et sont représentés pour permettre une meilleure compréhension de l'invention.

La figure 1 illustre un mode de chiffrement basé sur un compteur, connu sous l'acronyme CTR (CounTeR). Dans ce mode de chiffrement, un contenu à chiffrer est séparé en blocs Bᵢ ayant une taille fixe prédéfinie. Chaque bloc est chiffré de façon indépendante des autres blocs. Chaque bloc nécessite l'utilisation d'une valeur initiale VIᵢ formée généralement d'un "nonce" N (Number Used Only Once), c'est-à-dire un nombre aléatoire utilisé une seule fois et d'une valeur de compteur Cᵢ qui peut être incrémentée pour chaque bloc consécutif.

Cette valeur initiale VI est chiffrée au moyen d'un algorithme de chiffrement symétrique Alg₁ et d'une clé K₁. La valeur initiale ainsi chiffrée est ensuite combinée avec un bloc B₁ à chiffrer. La combinaison se fait au moyen d'une opération commutative, notée ⊕, de telle sorte que X ⊕ B₁ = B₁ ⊕ X. Une telle opération est par exemple un OU exclusif (XOR), une addition, un chiffrement symétrique ou une multiplication. Le résultat de cette combinaison donne un bloc chiffré B₁*.

Comme mentionné précédemment, dans le procédé CTR, chaque bloc est chiffré de façon indépendante des autres blocs, le nonce N, la clé K₁, l'algorithme de chiffrement symétrique Alg₁ et la combinaison ⊕ étant en principe les mêmes pour chaque bloc.

La figure 2 illustre le déchiffrement du bloc B₁* chiffré au moyen du mode de chiffrement CTR. Pour le déchiffrement, il suffit d'utiliser les mêmes étapes que pour le chiffrement, en remplaçant le bloc en clair B₁ utilisé pour le chiffrement, par le bloc chiffré B₁*.

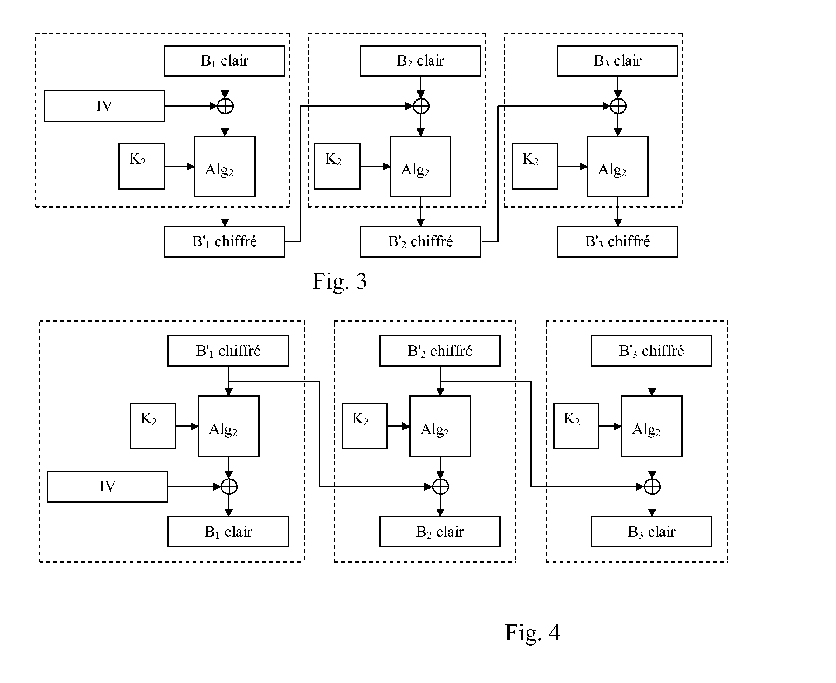

La figure 3 illustre un mode de chiffrement connu sous l'acronyme CBC (Cipher Block Chaining). Selon ce mode de chiffrement, le contenu à chiffrer est séparé en blocs Bᵢ ayant une taille fixe prédéfinie. Le chiffrement du premier bloc se fait généralement en utilisant un vecteur d'initialisation IV ayant la même dimension que le bloc à chiffrer. Selon l'algorithme CBC tel qu'illustré par la Fig. 3, le premier bloc à chiffrer B₁ est combiné avec le vecteur d'initialisation IV. Comme dans le mode CTR, cette combinaison est une opération commutative, par exemple un OU exclusif (XOR) ou une addition notamment.

Le résultat de cette combinaison est chiffré au moyen d'un algorithme de chiffrement symétrique Alg₂ et d'une clé K₂ pour aboutir à un bloc chiffré (B'₁). Ce bloc chiffré a la même taille que le bloc en clair.

Le chiffrement d'un deuxième bloc B₂ se fait de façon similaire au chiffrement du premier bloc, en remplaçant le premier bloc B₁ à chiffrer par le deuxième bloc B₂ à chiffrer et le vecteur d'initialisation IV par le premier bloc chiffré B'₁. Le procédé se poursuit ainsi pour chacun des blocs.

On voit qu'il est nécessaire de connaître le résultat du chiffrement d'un bloc déterminé pour être en mesure de chiffrer le bloc suivant.

Le déchiffrement d'un bloc chiffré au moyen du procédé CBC est illustré schématiquement par la Fig. 4. Le premier bloc chiffré B'₁ est tout d'abord traité au moyen de l'algorithme de chiffrement symétrique Alg₂ et de la clé K₂. Le résultat de ce traitement est combiné avec le vecteur d'initialisation IV. Le résultat de cette combinaison donne le bloc B₁ déchiffré.

Pour le bloc chiffré B'₂ suivant, le procédé se déroule de la même manière que pour le bloc B₁, en remplaçant le bloc chiffré B'₁ à déchiffrer par le bloc chiffré B'₂ et le vecteur d'initialisation IV par le bloc chiffré B'₁.

Le vecteur d'initialisation IV est le même que celui utilisé pour le chiffrement. L'opération commutative ⊕, la clé de chiffrement K₂ et l'algorithme de chiffrement symétrique Alg₂ sont également les mêmes que ceux utilisés lors du chiffrement.

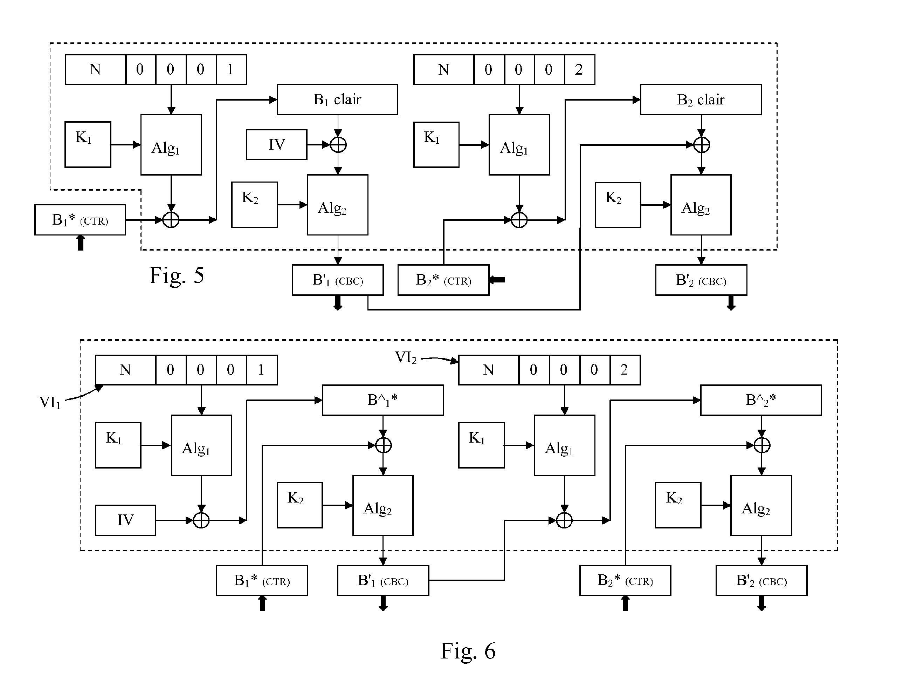

La Fig. 5 illustre un mode de conversion connu de l'art antérieur, dans lequel un contenu ayant été chiffré selon un premier mode de chiffrement, ici CTR, est reçu par un premier récepteur dans lequel le contenu est converti en un contenu qui pourra être déchiffré en utilisant un deuxième mode de chiffrement, ici CBC dans un deuxième récepteur. Dans ce mode de réalisation, un premier bloc, noté B₁*_{(CTR)}, chiffré selon le mode de chiffrement CTR est reçu par le premier récepteur. La réception des blocs est symbolisée par une flèche pointant en direction du bloc. Le bloc B₁*_{(CTR)} est d'abord déchiffré en utilisant le mode de chiffrement CTR. Ce déchiffrement se fait selon le principe expliqué en référence à la figure 2. Le contenu se trouve donc en clair dans le premier récepteur, à la fin du déchiffrement. Ce contenu en clair est noté B₁ clair. Le contenu en clair est ensuite chiffré en utilisant le mode de chiffrement CBC, de la manière décrite en référence à la figure 3. De cette manière, le contenu obtenu à la sortie du premier récepteur pourra être transmis à un deuxième récepteur sous forme chiffrée, ce deuxième récepteur étant en mesure d'obtenir le contenu en clair pour autant qu'il dispose des droits et des autres éléments requis pour le déchiffrement du contenu.

Le contenu obtenu par rechiffrement en mode CBC est noté B'_{1(CBC)} et porte une flèche pointant à l'opposé du bloc, symbolisant le fait que le bloc peut sortir du module cryptographique du premier récepteur.

Dans ce mode de réalisation, le bloc suivant est traité de manière similaire au premier bloc, en remplaçant le bloc entrant B₁*_{(CTR)} par un bloc entrant B₂*_{(CTR)} et le vecteur d'initialisation IV par le résultat du traitement du bloc précédent, à savoir le bloc noté B'_{1(CBC)} dans la Figure 5. Pour chaque bloc entrant chiffré selon le mode CTR, on a un bloc de sortie, chiffré selon le mode CBC. Le contenu est disponible en clair pendant la conversion.

Dans le procédé de l'invention, illustré à la figure 6, contrairement aux procédés de l'art antérieur tels que celui décrit par exemple en référence à la figure 5, le contenu n'est jamais disponible en clair dans le premier récepteur. Comme dans le mode de réalisation expliqué en référence à la figure 5, deux "ensembles" d'opérations sont chaînés de façon que le résultat du premier ensemble d'opérations soit utilisé comme entrée du deuxième ensemble d'opérations.

Dans le mode de réalisation illustré par cette Fig. 6, un contenu chiffré selon le procédé CTR, noté B₁*_{(CTR)}, est reçu par le premier récepteur. La valeur initiale VI₁ ayant servi à chiffrer ce contenu, de même que la clé K₁ et l'algorithme de chiffrement Alg₁ sont connus.

La valeur initiale VI₁ est chiffrée avec l'algorithme de chiffrement Alg₁ et la clé de chiffrement K₁ dans un module cryptographique du décodeur, pour donner une valeur de compteur chiffrée. Au lieu de combiner cette valeur de compteur chiffrée avec le contenu chiffré B₁*_{(CTR)}, ce qui aboutirait à l'obtention du contenu en clair, cette valeur de compteur chiffrée est combinée avec un vecteur d'initialisation IV tel qu'utilisé dans le cadre du chiffrement selon le procédé CBC.

Cette combinaison se fait au moyen de l'opération commutative ⊕ ayant servi au chiffrement pour l'obtention du bloc chiffré B₁*_{(CTR)}. Le résultat de cette combinaison donne un bloc chiffré noté B^₁*. Ce bloc chiffré B^₁* est combiné avec le contenu chiffré B₁*_{(CTR)} reçu par le premier récepteur, cette combinaison ayant les mêmes propriétés que les combinaisons mentionnées précédemment.

Le résultat de la combinaison est ensuite traité au moyen de l'algorithme de chiffrement symétrique Alg₂ mentionné précédemment et de la clé de chiffrement K₂. Le résultat de ce chiffrement aboutit à un contenu B'_{1(CBC)} qui peut être déchiffré par un récepteur connaissant la clé K₂, l'algorithme de chiffrement symétrique Alg₂ et utilisant le mode de chiffrement CBC.

Lorsqu'un bloc suivant, noté B₂*_{(CTR)} doit être traité de façon à être converti en un bloc qui pourra être déchiffré selon le mode CBC. Le bloc B₂*_{(CTR)} est tout d'abord reçu par le premier récepteur. Comme pour le premier bloc, la valeur initiale VI₂ est traitée au moyen de l'algorithme noté Alg₁ et de la clé K₁. Le résultat de ce traitement est combiné avec le bloc de sortie de la conversion précédente, à savoir avec le bloc noté B'_{1(CBC)}. Cette combinaison aboutit à un bloc chiffré noté B^₂*. Ce bloc chiffré est combiné avec le bloc d'entrée B₂*_{(CTR)}, puis le résultat de cette combinaison est chiffré au moyen de l'algorithme noté Alg₂ et de la clé K₂. Le résultat donne un bloc chiffré qui sera susceptible d'être déchiffré par le procédé CBC.

Le procédé se déroule de façon similaire pour les blocs suivants et l'on voit qu'à chaque bloc entrant, chiffré selon le mode CTR correspond un bloc sortant chiffré selon le mode CBC. On voit également qu'à aucun moment du procédé, des blocs de contenu en clair ne sont disponibles dans le récepteur.

En résumé, le déchiffrement selon un mode de chiffrement, par exemple CTR, suivi du chiffrement selon un autre mode de chiffrement, par exemple CBC, utilise deux combinaisons qui sont des opérations commutatives. Pour chacune des combinaisons, deux données d'entrée sont utilisées pour être combinées entre elles et aboutir à une donnée de sortie. Dans le procédé de l'invention, deux valeurs, correspondant à une donnée d'entrée de chacune des combinaisons, sont interverties par rapport à la succession du déchiffrement selon un mode de chiffrement, suivi du chiffrement selon un autre mode de chiffrement. Cette interversion entraîne que le contenu en clair n'est jamais disponible dans le premier récepteur, mais qu'il peut être obtenu par un déchiffrement dans le deuxième récepteur.

Le procédé de l'invention a été décrit avec un exemple dans lequel le contenu est reçu par le premier récepteur dans une forme chiffrée selon le mode de chiffrement CTR et est renvoyé au deuxième récepteur dans une forme chiffrée selon le mode de chiffrement CBC. Cette invention n'est pas limitée à ce mode de réalisation. En particulier, elle est également utilisable si les modes de chiffrement CBC et CTR sont inversés. De même, d'autres modes de chiffrement et de déchiffrement peuvent être utilisés, comme par exemple les modes suivants :
- chiffrement par enchaînement des blocs (CBC; Cypher block chaining);
- chiffrement par enchaînement des blocs par propagation (PCBC; Propagating Cypher Block Chaining);
- chiffrement basé sur un compteur (CTR; CounTeR);
- chiffrement par dictionnaire de codes (ECB; Electronic Code Book);
- chiffrement à rétroaction (CFB; Cipher Feedback);
- chiffrement à rétroaction de sortie (OFB; Output Feedback);
- chiffrement avec vol de texte (CTS; CipherText Stealing).
ainsi que leurs variantes. L'ordre dans lequel ces modes de chiffrement sont utilisés est quelconque. Pour que la méthode de l'invention fonctionne, il est nécessaire que les modes de chiffrement utilisés incluent une opération commutative telle que par exemple un OU exclusif (XOR), un chiffrement symétrique, une addition, ou une multiplication. Il est nécessaire que la méthode utilise au moins deux modes de chiffrement différents et que les opérations commutatives soient effectuées dans le premier récepteur, avec des données d'entrée qui sont interverties par rapport à un déchiffrement utilisant le mode de chiffrement ayant conduit à l'obtention du bloc chiffré reçu par le premier récepteur, suivi d'un rechiffrement selon un mode de chiffrement destiné au deuxième récepteur. Ceci permet d'assurer que le contenu ne sera pas disponible en clair dans le premier récepteur, mais qu'il sera accessible en clair dans le deuxième récepteur, pour autant que celui-ci dispose des droits d'accès et des moyens de déchiffrement requis.

Il existe un grand nombre de variantes possibles permettant d'atteindre le but de l'invention. En pratique, il est relativement simple de vérifier si une variante fonctionne. Il suffit d'introduire un contenu chiffré dans le module cryptographique du premier récepteur, de traiter ce contenu chiffré, de vérifier si le contenu apparaît en clair pendant le déroulement du procédé et de vérifier si le contenu peut être déchiffré dans le module cryptographique du deuxième récepteur. Le risque que le procédé fonctionne pour un bloc généré au hasard, mais qu'il ne fonctionne pas pour tous les blocs est extrêmement faible. L'essai avec un seul bloc suffit donc à déterminer de façon très fiable si le procédé est utilisable ou non.

Il est possible d'utiliser plus de deux modes de chiffrement, par exemple trois. Dans ce cas, les données d'entrée des combinaisons peuvent être permutées de plusieurs manières. Il est simplement important que le contenu n'apparaisse pas en clair dans le premier récepteur.

## Revendications

1. Procédé de conversion d'un contenu à accès conditionnel ayant été chiffré de façon à pouvoir être déchiffré par un premier récepteur, en utilisant un premier mode de chiffrement comportant une opération de combinaison commutative utilisant au moins deux données d'entrée, en un contenu chiffré de façon à pouvoir être déchiffré par un deuxième récepteur utilisant un deuxième mode de chiffrement comportant une opération de combinaison commutative utilisant au moins deux données d'entrée, **caractérisé en ce qu'**il comporte les étapes suivantes :
• réception par un module cryptographique dudit premier récepteur, dudit contenu chiffré selon le premier mode de chiffrement;
• choix d'une première donnée d'entrée de ladite opération de combinaison du premier mode de chiffrement, cette première donnée d'entrée étant requise pour déchiffrer le contenu à partir du contenu chiffré et en utilisant le premier mode de chiffrement;
• choix d'une deuxième donnée d'entrée de ladite opération de combinaison du deuxième mode de chiffrement, cette deuxième donnée d'entrée étant requise pour chiffrer le contenu à partir du contenu en clair et en utilisant le deuxième mode de chiffrement;
• interversion desdites première et deuxième données d'entrée de manière à:
- traiter le contenu reçu par le module cryptographique du premier récepteur, ce traitement comprenant une opération de déchiffrement selon le premier mode de chiffrement, en utilisant ladite donnée d'entrée correspondant au deuxième mode de chiffrement, et à
- traiter le contenu obtenu lors de l'étape de traitement précédente, ce traitement comprenant une opération de chiffrement selon le deuxième mode de chiffrement, en utilisant ladite donnée d'entrée correspondant au premier mode de chiffrement.

2. Procédé selon la revendication 1, **caractérisé en ce que** lesdits premier et deuxième modes de chiffrement sont choisis parmi :
• un chiffrement par enchaînement des blocs (CBC; Cypher block chaining);
• un chiffrement par enchaînement des blocs par propagation (PCBC; Propagating Cypher Block Chaining);
• un chiffrement basé sur un compteur (CTR; CounTeR);
• un chiffrement par dictionnaire de codes (ECB; Electronic Code Book);
• un chiffrement à rétroaction (CFB; Cipher Feedback);
• un chiffrement à rétroaction de sortie (OFB; Output Feedback);
• un chiffrement avec vol de texte (CTS; CipherText Stealing).

3. Procédé selon la revendication 1, **caractérisé en ce que** lesdites opérations commutatives sont choisies parmi un Ou exclusif, une addition, un chiffrement symétrique ou une multiplication.

4. Procédé selon la revendication 1, **caractérisé en ce que** le premier mode de chiffrement est un mode de chiffrement basé sur un compteur (CTR), **en ce que** le deuxième mode de chiffrement est un mode de chiffrement par enchaînement des blocs (CBC), **en ce que** les opérations commutatives pour les deux modes de chiffrement sont un OU exclusif, **en ce que** ladite première donnée d'entrée est un bloc chiffré (B₁*_{(CTR)}) selon un premier mode de chiffrement, reçu par le première récepteur, **en ce que** la deuxième donnée d'entrée est le résultat du déchiffrement selon le mode de chiffrement par enchaînement des blocs (CBC) du bloc précédent, **en ce que** le résultat du déchiffrement selon le mode de chiffrement par enchaînement des blocs (CBC) du bloc précédent est utilisé comme donnée d'entrée lors d'une opération de déchiffrement selon le mode de chiffrement basé sur un compteur (CTR) et **en ce que** le bloc chiffré (B₁*_{(CTR)}) formant ladite première donnée d'entrée est utilisé comme donnée d'entrée pour le chiffrement selon le deuxième mode de chiffrement.

5. Procédé selon la revendication 4, **caractérisé en ce que**, si le résultat du déchiffrement selon le mode de chiffrement par enchaînement des blocs (CBC) du bloc précédent n'est pas disponible, ce résultat est remplacé par un vecteur d'initialisation (IV).
